Europäisches Patentamt

European Patent Office

Office européen des brevets

(19)

(11) **EP 0 714 851 B1**

(12) **FASCICULE DE BREVET EUROPEEN**

(45) Date de publication et mention
de la délivrance du brevet:
**15.07.1998 Bulletin 1998/29**

(51) Int. Cl.$^6$: **C01B 39/02**, C01B 33/20,
C01B 33/18

(21) Numéro de dépôt: **95402673.8**

(22) Date de dépôt: **27.11.1995**

(54) **Procédé de synthèse de zéolithes et de solides mésoporeux à partir d'une solution homogène en système semi-ouvert**

Verfahren zur Herstellung von Zeolithen und von mesoporösen festen Körpern aus einer homogenen Lösung in einem halbgeöffneten System

Process for the synthesis of zeolites and of mesoporous solids from one homogeneous solution in an half-open system

(84) Etats contractants désignés:
**BE DE IT NL**

(30) Priorité: **30.11.1994 FR 9414499**

(43) Date de publication de la demande:
**05.06.1996 Bulletin 1996/23**

(73) Titulaire:
**INSTITUT FRANCAIS DU PETROLE**
**92502 Rueil-Malmaison (FR)**

(72) Inventeurs:
• **Benazzi, Eric**
**F-78360 Montesson (FR)**

• **Le Goff, Pierre-Yves**
**F-68350 Brunstatt (FR)**
• **Caullet, Philippe**
**F-68110 Illzach (FR)**
• **Guth, Jean-Louis**
**F-68200 Mulhouse (FR)**

(74) Mandataire: **Andreeff, François**
**INSTITUT FRANCAIS DU PETROLE**
**4, avenue de Bois-Préau**
**92502 Rueil-Malmaison (FR)**

(56) Documents cités:
EP-A- 0 131 898          EP-A- 0 473 509

Printed by Xerox (UK) Business Services
2.16.3/3.4

**Description**

La présente invention a pour objet un nouveau procédé de synthèse de zéolithes et de solides mésoporeux à base d'oxydes d'éléments tétravalents. Plus précisément, l'invention concerne un procédé de synthèse de zéolithes et de solides mésoporeux à base de silicium et/ou d'aluminium, le silicium et l'aluminium, sous forme de tétraèdres $TO_4$, constituant la charpente tridimensionnelle de ces solides.

Les zéolithes sont des tectosilicates cristallisés. Leur structure tridimensionnelle est construite par un assemblage de tétraèdres $TO_4$, mettant en commun leurs sommets, deux tétraèdres différents n'ayant qu'un oxygène en commun. Dans les zéolithes du type aluminosilicate, qui sont les plus communes, T représente le silicium tétravalent ainsi que l'aluminium trivalent. Les cavités et canaux, de dimensions moléculaires, de la charpente aluminosilicatée accueillent les cations compensant le déficit de charge lié à la présence de l'aluminium trivalent dans les tétraèdres.

La composition chimique des zéolithes contenant dans leur charpente les éléments Al et Si peut être représentée par la formule approchée suivante :

$$M_{2/n}O, Al_2O_3, xSiO_2$$

où

- M représente un cation de valence n, tel que par exemple un alcalin, un alcalino-terreux ou un cation organique,
- x est susceptible de varier en fonction de la structure de la zéolithe entre deux et l'infini ; si x est l'infini, la zéolithe est une silice microporeuse.

Chaque type de zéolithe possède une structure poreuse distincte. La variation des dimensions et formes des pores d'un type de zéolithe à l'autre entraîne des propriétés adsorbantes et catalytiques différentes. Seules les molécules de certaines dimensions et formes sont capables d'entrer dans les pores d'une zéolithe d'un type particulier. La composition chimique, et en particulier la nature des cations de compensation échangeables, est également un facteur important intervenant dans la sélectivité de l'adsorption et surtout dans les propriétés catalytiques de ces zéolithes.

Du fait de leurs propriétés de sélectivité géométrique et d'échange cationique, les zéolithes sont utilisées industriellement sur une large échelle aussi bien en adsorption (séchage de gaz, séparation de composés aromatiques, etc.) qu'en catalyse (craquage catalytique, hydrocraquage, isomérisation, etc.). En ce qui concerne les solides mésoporeux ordonnés (demande de brevet WO 91/11390 et Nature Vol 368, p. 317, 24 Mars 1994) aucune application industrielle n'existe à ce jour. Concernant les applications industrielles de solides mésoporeux, plusieurs brevets peuvent être cités, tels que US-A-5.105.051 et US-A-5.134.241.

Bien que de nombreuses zéolithes du type aluminosilicate existent dans la nature, la recherche de produits ayant des propriétés nouvelles a conduit au cours des dernières années à la synthèse d'une grande variété d'aluminosilicates à structure zéolithique. Parmi les nombreuses structures dont la synthèse a été réussie, on peut citer à titre d'exemples : la zéolithe Y (US-A-3.130.007), la zéolithe ZSM-5 ou MFI (US-A-3.702.886), la zéolithe ZSM-12 (US-A-3.832.449), la zéolithe ZSM-22 (US-A-4.481.177). Plus récemment, des solides mésoporeux ordonnés ont été synthétisés, en mettant en oeuvre des structurants organiques qui sont des tensio-actifs.

La synthèse de zéolithes a généralement lieu à partir d'un gel de silice ou de silice et d'alumine, la transformation de ce gel en cristaux de zéolithe ayant lieu par voie hydrothermale. La mécanisme de synthèse généralement admis est un mécanisme de dissolution-recristallisation. La formation des cristaux a lieu dans la phase liquide suite à des réactions de condensation entre certaines des espèces silicates et aluminosilicates présentes, la phase solide du gel jouant quant à elle un rôle de réservoir de réactifs grâce à sa dissolution continue. Ces réactions sont rendues possibles grâce à la présence d'agents mobilisateurs, généralement $OH^-$ mais également $F^-$ (synthèse en milieu basique ou en milieu neutre voire acide respectivement), lesquels permettent le transfert par la solution des espèces polycondensables. Le milieu réactionnel contient également des agents dits structurants qui sont incorporés lors de la cristallisation dans l'espace microporeux de la charpente contrôlant ainsi l'édification de la charpente et contribuant, par les interactions qui s'établissent, à la stabilité de l'édifice. Ces agents structurants peuvent être de nature minérale ou organique.

Les zéolithes étant des composés métastables, la nature de la zéolithe formée à partir d'un gel dépend non seulement des paramètres thermodynamiques classiques (composition globale du gel, température, pression) mais aussi de facteurs dits "cinétiques" liés à la "réactivité" du gel. Cette réactivité du gel, qui conditionne en partie le niveau de "sursaturation" atteint dans la phase liquide, est fonction de la méthode de préparation du gel ("histoire" du gel) ou de la nature des matières premières utilisées (état de division par exemple).

Cette méthode de synthèse à partir d'un gel présente divers inconvénients parmi lequel on peut citer :

- la difficulté d'obtenir en grande quantité des gels homogènes, en texture et en composition, présentant des propriétés de solubilité stables dans l'espace et le temps,

- la dissolution généralement non congruente (imparfaite) du gel, c'est-à-dire non homogène dans le temps et dans l'espace,

- les problèmes de génie chimique liés à la mise en oeuvre et qui mettent en évidence des difficultés d'agitation d'un gel, parfois très visqueux et une maîtrise compliquée des transferts thermiques dans l'ensemble du système réactionnel,

- la diminution possible de la réactivité du gel dû à son vieillissement durant la période de chauffage,

- une sursaturation de la solution qui est imposée par la composition et la texture du gel et qu'il n'est, de ce fait, pas possible de contrôler réellement,

- en conséquence du point précédent l'impossibilité de maîtriser les conditions de nucléation et de croissance des cristaux de zéolithe.

Une autre méthode possible de synthèse consiste à employer des mélanges réactionnels aqueux homogènes au lieu de gels.

La préparation de plusieurs types de zéolithes a ainsi été réalisée par chauffage de solutions aqueuses d'aluminosilicates basiques métastables.

Par exemples, la zéolithe de type FAU a été préparée selon cette méthode par S. Neda, N. Kageyama, M. Koizumi, Proc. 6th Int. Zeol. Conf., (Reno, USA, 1983) et A. Bisio et D.H. Olson Eds., Butterworths, UK, 1984 de même la zéolithe de type LTA a été obtenue aussi selon cette méthode P. Wengin, S. Neda, M. Koizumi, Proc. 7th Int. Zeol. Conf. (Tokyo, Japon, 1986) et Y. Murakami, A. Jijima, J.W. Ward, Eds., Kodanska-Elsevier, Tokyo-Amsterdam, 1986.

Par ailleurs des zéolithes de type MFI à base de silicium et d'élément(s) T', choisi(s) dans le groupe formé par Ti, Ge, Zr et Sn, ont été préparées à partir d'un mélange réactionnel aqueux homogène contenant une source de silicium sous forme d'un complexe fluoré, une ou plusieurs sources d'éléments tétravalents T' sous forme de complexes fluorés, un agent chimique modificateur qui fournit des ions HO⁻ par décomposition hydrothermique dans les conditions réactionnelles, et un agent structurant qui oriente et stabilise la formation de la zéolithe de type MFI. Le chauffage de ce mélange réactionnel comprenant l'agent chimique modificateur, à une température d'au moins 120° C, conduit à la formation d'un précipité de zéolithe qui est ensuite séparé. Ladite méthode est décrite dans les demandes de brevet français FR-A-2.666.321, FR-A-2.674.516 et FR-A-2.674.517.

Lors des synthèses en système fermé à partir des solutions mentionnées précédemment, il est clair que le contrôle de la sursaturation et donc des conditions de nucléation et de croissance n'est pas non plus réalisable.

La présente invention a donc pour objet un nouveau procédé de synthèse de zéolithes à base d'élément(s) T, c'est-à-dire à base de silicium ou à base de silicium et d'aluminium, et de solides mésoporeux à base d'élément(s) T, c'est-à-dire à base de silicium et/ou d'aluminium, qui permet d'éviter les inconvénients précédemment cités.

Ledit procédé, contrairement aux procédés antérieurs connus, est tel que les mélanges de départ sont constitués de solutions aqueuses homogènes, la synthèse de la zéolithe ou du solide mésoporeux ayant lieu en système semi-ouvert par injection contrôlée d'un réactif.

Plus particulièrement, la présente invention a pour objet un procédé de synthèse de zéolithes à base de silicium ou à base de silicium et d'aluminium, le rapport molaire Si/Al étant compris entre 1 et l'infini (bornes incluses), et de solides mésoporeux à base de silicium et/ou d'aluminium, soit à base de silicium ou à base d'aluminium ou à base de silicium et d'aluminium, comprenant les étapes successives suivantes :

i) la synthèse d'un milieu réactionnel homogène source d'élément(s) T (silicium et/ou aluminium) contenant :

a) - au moins une source d'élément(s) T, T étant choisi dans le groupe formé par le silicium et l'aluminium, choisie dans le groupe formé par les solutions aqueuses basiques et les solutions alcooliques de tétraorthosilicate d'alkyle et de trialkoxyaluminate,

b) - éventuellement au moins un agent structurant, organique et/ou minéral,

c) - éventuellement des germes de la phase cristalline désirée,

ii) le chauffage du milieu réactionnel à une température comprise entre 20 et 220° C et de préférence entre 20 et 180° C pendant une durée comprise entre quelques minutes et quelques jours et de préférence entre 10 minutes et 24 heures,

iii) l'injection à vitesse contrôlée d'au moins un agent chimique qui permet la génération des espèces polycondensables dans ledit milieu au fur et à mesure de leur utilisation pour assurer la nucléation et la croissance des cristaux des zéolithes ou des solides mésoporeux.

Ainsi, dans le cas où le procédé synthétise des zéolithes à base d'élément(s) T, T est le silicium, ou bien le silicium et l'aluminium. Dans le cas où le procédé synthétise des solides mésoporeux à base d'élément(s) T, T est le silicium, ou bien l'aluminium, ou bien le silicium et l'aluminium.

Ledit procédé de synthèse selon l'invention peut éventuellement comprendre une étape supplémentaire de calcination des cristaux obtenus à l'étape (iii) à une température supérieure à 400° C, afin d'éliminer l'agent structurant inclus dans les canaux des structures ainsi préparées.

La source d'élément(s) T (silicium ou aluminium) utilisable est :

- soit une solution aqueuse à base de silice stable et éventuellement une solution aqueuse à base d'alumine stable, l'ensemble de ces deux solutions étant basique ; lesdites solutions aqueuses sont bien connues de l'homme du métier on peut citer à titre d'exemple non limitatif : des solutions aqueuses de silicates et d'aluminate de sodium.

- soit une solution alcoolique de $Si(OR)_4$ tétraorthosilicate de silicium et éventuellement de $Al(OR)_3$ trialkoxyalumi-nium ; lesdites solutions sont bien connues de l'homme du métier.

La source d'élément(s) T est sous forme entièrement soluble dans le milieu réactionnel afin d'assurer l'homogénéité dudit milieu, que l'on qualifie de solution homogène.

L'agent structurant utilisé est choisi parmi ceux connus de l'homme du métier pour les synthèses des zéolithes et des solides mésoporeux. Il peut être employé seul ou en mélange avec au moins un autre agent structurant. Par exemple dans le cas d'un agent structurant minéral, on peut citer le sodium mais aussi l'anion fluorure $F^-$.

Les espèces polycondensables sont obtenues à partir dudit milieu réactionnel homogène par injection à vitesse contrôlée d'au moins un agent chimique. La nature de l'agent chimique dépend de la nature de la source d'élément(s) T.

Ainsi : dans le cas où la source d'élément(s) T est une solution aqueuse basique de silice ou de silice-alumine les espèces polycondensables sont produites par injection à vitesse contrôlée d'au moins un agent chimique choisi dans le groupe formé par les acides, les alcools, les éthers, par exemple le méthanol (MeOH) ou l'éthanol (EtOH), les solutions aqueuses d'aluminate et les solutions aqueuses d'agent structurant dans le cas par exemple où l'agent structurant n'est pas initialement présent dans le mélange réactionnel.

Dans le cas où l'agent chimique est un acide, c'est un acide pur ou bien une solution aqueuse d'un acide. Par exemple, on peut citer l'acide acétique, $CH_3CO_2H$, et le chlorure d'ammonium, $NH_4Cl$, ou bien encore un gaz tel que le $CO_2$. Dans ce cas l'injection à vitesse contrôlée d'acide conduit à une diminution du pH de la solution et à la formation d'espèces polycondensables selon la réaction suivante :

$$2 \equiv T\text{-}O^- \xrightarrow[v_1]{H^+} 2 \equiv T\text{-}OH \xrightarrow[v_2]{} \equiv T\text{-}O\text{-}T \equiv + H_2O$$

où T = Si, Al.

Le contrôle de la vitesse d'injection de l'acide et donc de la vitesse de formation des espèces polycondensables( $v_1$) permet la formation directe de cristaux de zéolithes ou de solides mésoporeux à partir de la solution sans formation intermédiaire d'un gel. Le contrôle de la sursaturation en espèces polycondensables permet le contrôle de la vitesse de cristallisation.

Ainsi : dans le cas où la source d'éléments T est une solution alcoolique de $Si(OR)_4$ et/ou $Al(OR)_3$ les espèces polycondensables sont produites par injection à vitesse contrôlée d'au moins un agent chimique choisi dans le groupe formé par l'eau, les solutions aqueuses de base ou d'acide, les composés qui par décomposition à la température de synthèse conduisent à la formation d'eau et les solutions aqueuses d'agent structurant dans le cas, par exemple, où l'agent structurant n'est pas initialement présent dans le milieu réactionnel.

Dans tous les cas, la synthèse de la zéolithe ou du solide mésoporeux peut se dérouler sous agitation (mode agité) ou sous mode statique, l'agitation étant particulièrement facile puisque l'on est en présence d'un milieu réactionnel homogène.

Les exemples suivants illustrent l'invention sans toutefois en limiter la portée.

Exemple 1 :

1,2 gramme de silice Aérosil 130 sont dissous dans une solution aqueuse de soude (0,4 gramme de soude et 7,2 grammes d'eau). Puis, 0,532 gramme de bromure de tétrapropylammonium, TPABr, (Fluka) sont dissous dans 21,6 grammes d'eau. Les deux solutions sont ensuite mélangées. La composition molaire de la solution est :

1 SiO$_2$ ; 0,5 NaOH ; 80 H$_2$O ; 0,1 TPABr

Cette solution est introduite dans un autoclave chemisé intérieurement de Téflon (capacité 125 cm$^3$) et chauffée à 170° C. La synthèse est réalisée en 6 heures à 170° C en mode agité par injection de 15 cm$^3$ de méthanol (Merck) à l'aide d'une pompe HPLC (débit 50 $\mu$l/min).

Après refroidissement, le produit est recueilli par filtration puis lavé à l'eau distillée et séché à 80° C pendant 12 heures.

Le pH initial et le pH final sont respectivement voisins de 11,2 et de 12. Le diagramme de diffraction des rayons X est caractéristique d'une zéolithe de type MFI et est reporté dans le tableau 1. La masse obtenue est de 0,7 gramme et la longueur moyenne des cristaux est voisine de 4 mm.

Tableau 1

| Diagramme de diffraction des rayons X | | | |
|---|---|---|---|
| d(hkl) (Å) | I/Io | d(hkl) (Å) | I/Io |
| 11,08 | TF | 3,045 | m f |
| 9,95 | F | 2,977 | m f |
| 9,68 | m F | 2,939 | f |
| 8,91 | t f | 2,856 | t f |
| 7,40 | m | 2,724 | t f |
| 7,04 | f | 2,603 | f |
| 6,68 | f | 2,485 | t f |
| 6,33 | m | 2,392 | t f |
| 6,04 | m | 2,005 | f |
| 5,95 | m | 1,992 | f |
| 5,69 | m f | 1,871 | t f |
| 5,54 | m | | |
| 4,43 | t f | | |
| 4,35 | m f | | |
| 4,24 | m | | |
| 3,99 | f | | |
| 3,83 | f | | |
| 3,81 | TF | | |
| 3,74 | m F | | |
| 3,70 | F | | |
| 3,64 | F | | |
| 3,431 | m | | |
| 3,335 | m f | | |
| 3,301 | m f | | |
| TF : très fort, F : fort, mF : moyen fort, m : moyen, mf : moyen faible, f : faible, tf : très faible 1 (Å) = 10$^{-10}$m. | | | |

Exemple 2 :

1,2 gramme de silice Aérosil 130 sont dissous dans une solution aqueuse de soude (0,4 gramme de soude et 7,2 grammes d'eau). Puis 0,07 gramme d'aluminate de sodium, $NaAlO_2$, (Carlo Erba) sont dissous dans une solution aqueuse de soude (0,12 gramme de soude et 7,2 gramme d'eau). Enfin, 0,532 gramme de bromure de tétrapropylammonium, TPABr, (Fluka) sont dissous dans 14,4 gramme d'eau. Les trois solutions sont mélangées. La composition molaire de la solution est :

1 $SiO_2$ ; 0,65 NaOH; 0,0427 $NaAlO_2$ ; 80 $H_2O$ ; 0,1 TPABr

Cette solution est introduite dans un autoclave chemisé intérieurement de Téflon (capacité 125 cm$^3$) et chauffée à 170° C. La synthèse est réalisée en 6 heures à 170°C en mode agité par injection de 9 cm$^3$ d'acide acétique molaire (Fluka) à l'aide d'une pompe HPLC (débit 25 $\mu$l/min).

Après refroidissement, le produit est recueilli par filtration puis lavé à l'eau distillée et séché à 80° C pendant 12 heures.

Le pH initial et le pH final sont respectivement voisins de 12,1 et de 11,4. Le diagramme de diffraction des rayons X est caractéristique d'une zéolithe de type MFI et est très proche de celui indiqué dans le tableau 1. La masse obtenue est de 1,17 gramme ; le rapport molaire Si/Al de 25.

Exemple 3 :

1,2 gramme de silice Aérosil 130 sont dissous dans une solution aqueuse d'hydroxyde de tétraméthylammonium, TMAOH, (25 % dans l'eau, Aldrich) et de potasse (7,28 grammes d'hydroxyde de tétraméthylammonium à 25 % dans l'eau, 1,12 gramme de potasse et 9 grammes d'eau). Dans cette solution 0,0328 gramme d'aluminate de sodium sont ensuite dissous.

La composition molaire de la solution ainsi obtenue est :

1$SiO_2$ ; 1KOH ; 1TMAOH ; 0,02 $NaAlO_2$ ; 80$H_2O$

Cette solution est introduite dans un autoclave chemisé intérieurement de Téflon (capacité 125 cm$^3$) et chauffée à 170° C. La synthèse se déroule en 5 heures à 170° C en mode agité par injection de 15 cm$^3$ d'acide acétique molaire (Fluka) à l'aide d'une pompe HPLC (débit 50 $\mu$l/min).

Après refroidissement, le produit est recueilli par filtration, puis lavé à l'eau distillée et séché à 80° C pendant 12 heures.

Le pH initial et le pH final sont respectivement voisins de 14 et de 12,1. Le diagramme de diffraction des rayons X est caractéristique d'une zéolithe de type OFF (offrétite) et est indiqué dans le tableau 2. La masse obtenue est de 0,12 gramme.

Tableau 2

| Diagramme de diffraction des rayons X ||
| --- | --- |
| d(hkl) (Å) | I/Io |
| 11,4 | TF |
| 7,50 | m |
| 6,58 | m F |
| 6,29 | m f |
| 5,71 | m |
| 4,55 | m |
| 4,32 | m F |
| 3,81 | m F |
| 3,75 | F |
| 3,581 | m F |
| 3,305 | m |
| 3,148 | m |
| 3,124 | f |

Tableau 2 (suite)

| Diagramme de diffraction des rayons X | |
| --- | --- |
| d(hkl) (Å) | I/Io |
| 2,927 | f |
| 2,862 | m F |
| 2,843 | F |
| 2,677 | m f |
| 2,498 | m f |
| 2,480 | m f |
| 2,204 | f |
| 2,115 | f |
| 2,101 | f |
| 2,080 | t f |
| 1,889 | m f |
| 1,834 | f |
| TF : très fort, F : fort, mF : moyen fort, m : moyen, mf : moyen faible, f : faible, tf : très faible $1 (Å) = 10^{-10}$m. | |

Exemple 4 :

1,2 gramme de silice Aérosil 130 sont dissous dans une solution aqueuse d'hydroxyde de tétraméthylammonium (25 % dans l'eau, Aldrich) (14,56 grammes d'hydroxyde de tétraméthylammonium à 25 % dans l'eau et 3,46 grammes d'eau). Dans cette solution 0,027 gramme d'alumine (24,6 % d'eau) sont ensuite dissous.
La composition molaire de la solution ainsi obtenue est :

$SiO_2$ ; 2TMAOH; 0,01 $Al_2O_3$ ; 80 $H_2O$

Cette solution est introduite dans un autoclave chemisé intérieurement de Téflon (capacité 125 cm$^3$) et chauffée à 170° C. La synthèse se déroule en 44 heures à 170° C en mode statique par injection de 15 cm$^3$ d'une solution molaire de chlorure d'ammonium à l'aide d'une pompe HPLC (débit 5,7 μl/min).

Après refroidissement, le produit est recueilli par filtration puis lavé à l'eau distillée et séché à 80° C pendant 12 heures.

Le pH initial et le pH final sont respectivement voisins de 14 et de 12,5. Le diagramme de diffraction des rayons X est caractéristique d'une zéolithe de type SOD et est reporté dans le tableau 3. La masse obtenue est de 0,9 gramme. La composition molaire est la suivante 5$SiO_2$ ; 1$AlO_2^-$ ; 1$TMA^+$.

Tableau 3

| Diagramme de diffraction des rayons X. | |
| --- | --- |
| d(hkl) (Å) | I/Io |
| 6,29 | m F |
| 4,56 | F |
| 3,64 | TF |
| 3,161 | m |
| 2,827 | m |
| 2,581 | m |
| 2,234 | m f |

Tableau 3 (suite)

| Diagramme de diffraction des rayons X. | |
|---|---|
| d(hkl) (Å) | I/Io |
| 2,109 | f |
| 1,908 | f |
| TF : très fort, F : fort, mF : moyen fort, m : moyen, mf : moyen faible, f : faible, tf : très faible  $1\ (\text{Å}) = 10^{-10}\text{m}$ . | |

Exemple 5 :

1,2 gramme de silice Aérosil 130 sont dissous dans une solution aqueuse de soude (0,4 gramme de soude et 7,2 grammes d'eau). Puis, 28,8 grammes de chlorure d'hexadecyl-triméthylammonium, CTMACl, (25 % dans l'eau, Fluka) sont ajoutés à cette solution. La composition molaire de la solution obtenue est la suivante :

$1SiO_2$ ; 0.5 NaOH ; 1,125 CTMACl ; 80 $H_2O$

A la température de 20° C, 15 $cm^3$ d'une solution molaire de chlorure d'ammonium sont injectés en trois minutes (débit 5 $\mu$l/min).

Le produit est recueilli par filtration puis lavé à l'eau distillée et enfin séché à 80° C pendant 12 heures.

Le pH initial et le pH final sont respectivement voisins de 11,5 et de 9,8. Le diffractogramme de rayons X est caractéristique d'un produit mésoporeux du type MCM-41 ; une raie de diffraction intense correspondant à une valeur de d(hkl) égal à 37 Å environ, est accompagnée de quelques raies beaucoup moins intenses à 21,4 ; 18,5 et 14 Å. La masse obtenue est de 1,3 gramme.

Exemple 6 :

La solution de silicate de tétrapropylammonium est préparée par dissolution de 3 grammes de silice Aérosil dans 50 $cm^3$ d'une solution aqueuse molaire de $Pr_4N^+OH^-$ (à 20 % en poids de $Pr_4NOH$, Fluka). Cette solution de composition molaire $1SiO_2$ ; 1 $Pr_4NOH$ ; $45H_2O$ est transférée dans un autoclave chemisé intérieurement de Téflon (125 $cm^3$ de capacité) puis chauffée à 170° C. La synthèse a lieu en 24 heures par injection contrôlée et continue de gaz carbonique (débit horaire de 0,14 gramme/h) à 170° C et en mode agité (barreau magnétique). Après refroidissement brutal (l'autoclave est plongé dans l'eau froide à 15° C), le solide est filtré, lavé à l'eau distillée puis séché à 80° C pendant 24 heures.

Le pH initial et le pH final sont respectivement de 13,5 et 12,8.

Le diagramme de diffraction est analogue à celui indiqué dans le tableau 1 et est caractéristique de la zéolithe de type MFI. La masse recueillie est voisine de 1 gramme, la taille des cristaux obtenus (longueur) est proche de 8 mm.

Exemple 7 :

Une synthèse analogue à la synthèse de l'exemple 6 est réalisée en prolongeant la durée d'injection jusqu'à 48 heures (les autres conditions opératoires restent identiques). Elle conduit à une masse de zéolithe de type MFI (diagramme de diffraction des rayons X analogue à celui du tableau 1) proche de 2,8 grammes. La taille (longueur) des cristaux obtenus est voisine de 15 mm, le pH final étant voisin de 10,3.

Exemple 8 :

7,8 g de silice aérosil 130 sont dissous à chaud dans 30,07 g d'une solution aqueuse d'hydroxide de tétraéthylammonium (solution à 40 % TEAOH en poids, Fluka, purum). 0,369 g d'aluminate de sodium ($NaAlO_2$, Carlo Erba) sont par ailleurs dissous à température ambiante dans une solution préparée par dissolution de 0,4 g de soude dans 13,1 g d'eau. La solution formée par mélange des 2 solutions précédentes présente la composition molaire suivante : $26SiO_2$ ; $0,9NaAlO_2$ ; 2NaOH ; 18 TEAOH ; 333 $H_2O$. Son pH est voisin de 13,8.

Cette solution est introduite dans un autoclave chemisé intérieurement de téflon (capacité 125 $cm^3$) et chauffée à 150° C. La synthèse est réalisée en 22 heures à 150° C et sous agitation par injection de 15 $cm^3$ d'une solution aqueux molaire d'acide acétique (Fluka) à l'aide d'une pompe HPLC (débit voisin de 11 $\mu$l/minute). Le pH final est de 13,1.

La masse de produit solide recueilli après filtration, lavage, séchage (à 80° C) et réhydratation est de 1,37 g. Le diagramme de diffraction des rayons X est caractéristique de celui d'une zéolithe bêta (tableau 4). Le rapport molaire Si/Al déterminé chimiquement est proche de 9.

Tableau 4

| Diagramme de diffraction des rayons X. | |
|---|---|
| d(hkl) (Å) | I/Io |
| 11,7 | m F |
| 4,15 | m F |
| 3,95 | TF |
| 3,52 | f |
| 3,32 | m |
| 3,02 | m |
| 2,07 | f |

TF : très fort, F : fort, mF : moyen fort, m : moyen, mf : moyen faible, f : faible, tf : très faible
1 (Å) = $10^{-10}$m.

Exemple 9 :

1,2 gramme de silice Aérosil sont dissous dans une solution aqueuse de soude (7,2 grammes d'eau et 1,2 gramme de soude). Puis, 0,07 g d'aluminate de sodium ($NaAlO_2$ Carlo Erba) sont dissous dans une solution aqueuse constituée de 7,2 grammes d'eau et de 0,08 gramme de soude. Les deux solutions sont mélangées plus additionnées de 14,4 grammes d'eau. La composition molaire finale est la suivante :
$1SiO_2$ ; 0,0422 $NaAlO_2$ ; 1,6 NaOH ; 80 $H_2O$

Cette solution est introduite dans un autoclave chemisé intérieurement de téflon (capacité 125 $cm^3$), puis additionnée de 0,24 gramme de cristaux de zéolithe NaY (Si/Al = 2.6) et chauffée à 100° C. La synthèse est réalisée en trois heures à 100° C en mode agité par injection de 15 $cm^3$ d'acide acétique molaire (Fluka) à l'aide d'une pompe HPLC (débit 83 μl/min).

Après refroidissement le produit est recueilli par filtration puis lavé à l'eau distillée et séché à 80° C pendant 12 heures. Le pH initial est au moins égal à 14 et le pH final est de 12,9. Le diagramme de diffraction des rayons X est caractéristique d'une zéolithe de type FAU et est reporté dans le tableau 5.

La masse obtenue est de 0,41 gramme. Le rapport molaire Si/Al est voisin de 2,6.

Tableau 5

| Diagramme de diffraction des rayons X. | |
|---|---|
| d(hkl) (Å) | I/Io |
| 14,2 | TF |
| 8,71 | m |
| 7,43 | f |
| 5,65 | m F |
| 4,74 | m f |
| 4,35 | m |
| 3,76 | m F |
| 3,29 | m |
| 3,02 | f |
| 3,00 | f |

Tableau 5 (suite)

| Diagramme de diffraction des rayons X. | |
| --- | --- |
| d(hkl) (Å) | I/Io |
| 2,90 | m f |
| 2,84 | m F |
| 2,75 | f |
| 2,63 | f |

TF : très fort, F : fort, mF : moyen fort, m : moyen, mf : moyen faible, f : faible, tf : très faible
$1 (\text{Å}) = 10^{-10}\text{m}.$

Exemple 10 :

1,2 gramme de silice Aérosil 130 sont dissous dans une solution aqueuse de soude (1,28 grammes de soude et 7,2 grammes d'eau). La composition molaire de la solution est :

1 $SiO_2$ ; 1,6 NaOH ; 80 $H_2O$

0,24 grammes de zéolithe de type FAU de rapport Si/Al de 2,6 sont introduits dans 21,6 grammes d'eau. Les deux solutions sont ensuite mélangées.

Cette solution est introduite dans un autoclave chemisé intérieurement de ©Téflon (capacité 125 cm³) et chauffée à 100° C. La synthèse est réalisée en 5 heures à 100° C en mode agité par injection de 15 cm³ de sulfate d'aluminium de concentration 0,233 Mol/l (Prolabo) à l'aide d'une pompe HPLC (débit 50 µl/min).

Après refroidissement, le produit est recueilli par filtration puis lavé à l'eau distillée et séché à 80° C pendant 12 heures.

Les pH initiaux et finals sont respectivement voisins de 14. Le diffractogramme est caractéristique d'une zéolithe de type FAU. La masse obtenue est de 1,42 grammes, et le rapport Si/Al est voisin de 2,6.

**Revendications**

1. Procédé de synthèse de zéolithes, à base de silicium ou à base de silicium et d'aluminium, et de solides mésoporeux à base de silicium ou à base d'aluminium ou à base de silicium et d'aluminium, comprenant les étapes successives suivantes :

   i) la synthèse d'un milieu réactionnel source d'élément(s) T, T étant choisi dans le groupe formé par le silicium et l'aluminium, homogène contenant au moins une source d'élément(s) T choisie dans le groupe formé par les solutions aqueuses basiques et les solutions alcooliques de tétraorthosilicate d'alkyle et de trialkoxyaluminate,

   ii) le chauffage du mélange réactionnel à une température comprise entre 20 et 220° C pendant une durée comprise entre quelques minutes et quelques heures,

   iii) l'injection à vitesse contrôlée d'au moins un agent chimique qui permet la génération des espèces polycondensables dans ledit milieu.

2. Procédé de synthèse de zéolithes et de solides mésoporeux selon la revendication 1, tel que le milieu réactionnel comprend en outre au moins un agent structurant.

3. Procédé de synthèse de zéolithes et de solides mésoporeux selon l'une des revendications 1 ou 2 tel que le milieu réactionnel comprend en outre des germes de la phase cristalline désirée.

4. Procédé de synthèse selon l'une des revendications 1 à 3 comprenant une étape supplémentaire de calcination des cristaux, obtenus après filtration de la solution obtenue à l'étape (iii), à une température supérieure à 400° C.

5. Procédé de synthèse selon l'une des revendications 1 à 4 tel que la source d'élément(s) T est une solution aqueuse basique à base de silice ou à base d'alumine ou à base de silice et d'alumine.

6. Procédé selon la revendication 5 tel que l'agent chimique est choisi dans le groupe formé par les acides, les alcools, les solutions aqueuses d'aluminate et les solutions aqueuses d'agent structurant dans le cas où l'agent structurant n'est pas initialement présent dans le milieu réactionnel.

7. Procédé de synthèse selon l'une des revendications 1 à 4 tel que la source d'élément(s) T est une solution alcoolique de tétraorthosilicate de silicium, $Si(OR)_4$, et éventuellement de trialkoxyaluminate, $Al(OR)_3$.

8. Procédé selon la revendication 7 tel que l'agent chimique est choisi dans le groupe formé par l'eau, les composés qui par décomposition à la température de la synthèse conduisent à la formation d'eau et les solutions aqueuses d'agent structurant dans le cas où l'agent structurant n'est pas initialement présent dans le milieu réactionnel.

**Claims**

1. A process for the synthesis of zeolites based on silicon or based on silicon and aluminium, and mesoporous solids based on silicon or based on aluminium, or based on silicon and aluminium, comprising the following sequence of steps:

   i) synthesizing a reaction medium as a source of element(s) T, T being selected from the group formed by silicon and aluminium, containing at least one source of element(s) T selected from the group formed by aqueous basic solutions and alcoholic solutions of an alkyl tetraorthosilicate and of a trialkoxyaluminate;
   ii) heating the reaction medium to a temperature in the range 20°C to 220°C for a period in the range several minutes and several days;
   iii) injecting at least one chemical agent at a controlled rate to generate polycondensable species in said medium.

2. A process for the synthesis of zeolites and mesoporous solids according to claim 1, in which the reaction medium further comprises at least one structuring agent.

3. A process for the synthesis of zeolites and mesoporous solids according to claim 1 or claim 2, in which the reaction medium further comprises seeds of the desired crystalline phase.

4. A synthesis process according to any one of claims 1 to 3, comprising a supplementary step of calcining the crystals obtained after filtration of the solution obtained from step (iii), at a temperature of more than 400°C.

5. A synthesis process according to any one of claims 1 to 4, in which the source of element(s) T is a basic aqueous silica-based or alumina-based solution or a solution based on silica and alumina.

6. A process according to claim 5, in which the chemical agent is selected from the group formed by acids, alcohols, aqueous aluminate solutions and aqueous solutions of a structuring agent when the structuring agent is not initially present in the reaction medium.

7. A synthesis process according to any one of claims 1 to 4, in which the source of element(s) T is an alcoholic solution of s silicon tetraorthosilicate, $Si(OR)_4$, and optionally of s trialkoxyaluminate, $Al(OR)_3$.

8. A process according to claim 7, in which the chemical agent is selected from the group formed by water, compounds which decompose at the synthesis temperature to the form water, and aqueous solutions of a structuring agent when the structuring agent is not initially present in the reaction medium.

**Patentansprüche**

1. Verfahren zur Synthese von Zeolithen auf der Basis von Silicium oder auf der Basis von Silicium und Aluminium und von mesoporösen Feststoffen auf der Basis von Silicium oder auf der Basis von Aluminium oder auf der Basis von Silicium und Aluminium, die folgenden aufeinanderfolgenden Stufen umfassend:

   (i) die Synthese eines Reaktionsmediums, Quelle der/des Elemente(s) T, wobei T gewählt ist aus der Gruppe, die durch Silicium und Aluminium gebildet ist, homogen ist und Wenigstens eine Quelle der/des Elemente(s) T enthaltend, die gewählt ist aus der Gruppe, die gebildet ist durch die wässrigen basischen Lösungen und die alkoholischen Lösungen von Alkyl-Tetraorthosilikat und Trialkoxyaluminat,

(ii) die Erwärmung des Reaktionsgemisches auf eine Temperatur zwischen 20 und 220°C über einen Zeitraum zwischen etlichen Minuten und etlichen Stunden,

(iii) die Injektion bei geregelter Geschwindigkeit Wenigstens eines chemischen Agents, welches die Erzeugung in diesem Medium polykondensierbarer Spezies ermöglicht.

2. Verfahren zur Synthese von Zeolithen und mesoporösen Feststoffen gemäß Anspruch 1, derart, daß das Reaktionsmedium im übrigen Wenigstens ein Strukturbildnermittel umfaßt.

3. Verfahren zur Synthese von Zeolithen und mesoporösen Feststoffen gemäß einem der Ansprüche 1 oder 2, derart, daß das Reaktionsmedium im übrigen Keime der gewünschten kristallinen Phase umfaßt.

4. Verfahren zur Synthese gemäß einem der Ansprüche 1 bis 3, umfassend: eine zusätzliche Stufe der Kalzinierung der Kristalle, erhalten nach Filtration der in der Stufe (iii) erhaltenen Lösung, bei einer Temperatur oberhalb 400°C.

5. Verfahren zur Synthese gemäß einem der Ansprüche 1 bis 4, derart, daß die Quelle für das/die Element(e) T eine wässrige basische Lösung auf der Basis von Siliciumoxid oder auf der Basis von Aluminiumoxid oder auf der Basis von Siliciumoxid und Aluminiumoxid ist.

6. Verfahren nach Anspruch 5, derart, daß das chemische Mittel geWählt ist aus der Gruppe, die durch die Säuren, die Alkohole, die Wässrigen Aluminatlösungen und die Wässrigen Lösungen eines Strukturbildnermittels für den Fall gebildet ist, daß der Strukturbildner nicht ursprünglich im Reaktionsmedium vorhanden ist.

7. Verfahren zur Synthese gemäß einem der Ansprüche 1 bis 4, derart, daß die Quelle für das/die Element(e) T eine alkoholische Lösung von Silicium-Tetraorthosilikat $Si(OR)_4$ und gegebenenfalls von Trialkoxyaluminat, $Al(OR)_3$ ist.

8. Verfahren nach Anspruch 7, derart, daß das chemische Agents gewählt ist aus der Gruppe, die durch Wasser, die Verbindungen, die durch Zersetzungen bei Synthesetemperatur zur Bildung von Wasser führen und die wässrigen Lösungen des Strukturbildnermittels für den Fall gebildet sind, daß der Strukturbildner nicht von Anfang an im Reaktionsmedium vorhanden ist.